# EUROPÄISCHE PATENTSCHRIFT

(11) **EP 1 723 360 B1**
(45) Veröffentlichungstag und Bekanntmachung des Hinweises auf die Patenterteilung: **17.10.2007**
(21) Anmeldenummer: 04806492.7
(22) Anmeldetag: 28.12.2004
(51) Int. Cl.: F16L 1/00

(54) **STECKBARE SICHERHEITSKUPPLUNG FÜR DRUCKLEITUNGEN MIT SCHWENKBAREM SPERRORGAN**
PLUG-IN SAFETY COUPLING FOR PRESSURE PIPES, COMPRISING A PIVOTED BLOCKING MEMBER
RACCORD DE SECURITE ENFICHABLE POUR CONDUITES DE PRESSION A ELEMENT DE BLOCAGE PIVOTANT

(30) Priorität: 09.01.2004 CH 302004
(43) Veröffentlichungstag der Anmeldung: 22.11.2006
(73) Patentinhaber: Hans Oetiker AG Maschinen- und Apparatefabrik, 8812 Horgen (CH)
(72) Erfinder: MEIER, Ulrich, 8820 Wädenswil (CH); GREMINGER, Hans, 8810 Horgen (CH)
(74) Vertreter: Strehl Schübel-Hopf & Partner
(86) Internationale Anmeldenummer: PCT/IB2004/004328
(87) Internationale Veröffentlichungsnummer: WO 2005/075868

(56) Entgegenhaltungen:
- CH-A5- 685 257
- US-A- 5 681 027

## Beschreibung

Diese Erfindung betrifft eine steckbare Sicherheitskupplung für Druckleitungen, sei es für Gase oder Fluide, welche ein schwenkbares Sperrorgan aufweist. Kupplungen mit schwenkbaren Sperrorganen sind seit langem bekannt. Die Kupplung besteht aus einer Kupplungsdose und einem Kupplungsstecker, wobei die Kupplungsdose ein Gehäuse bildet, in dessen Innerem ein zylinderförmiges Sperrorgan schwenkbar gelagert ist. Das zylindrische Sperrorgan ist von einer diametrischen Bohrung durchsetzt. Wenn das Sperrorgan in der Kupplungsdose so verschwenkt ist, dass seine diametrische Bohrung nicht mehr mit der Druckleitung fluchtet und kommuniziert, so ist der Durchfluss unterbunden und der Kupplungstecker kann drucklos in das Sperrorgan gesteckt werden, wonach er mitsamt dem Sperrorgan in die Leitungslage geschwenkt wird.
Eine ähliche Kupplung ist z.B. in Dokument CH 685257 A5 beschrieben.

Es muss nun sichergestellt werden, dass diese Leitungslage gesichert wird, das heisst es muss unterbunden werden, dass der Kupplungsstecker mit dem Sperrorgan wieder zurückschwenken kann. Für diese Sicherung sind mehrere Varianten bekannt. Eine Variante besteht darin, dass das Kupplungsgehäuse, welches das Sperrorgan umschliesst und längs des Schwenkweges des Steckers einen Schlitz bzw. ein Langloch aufweist, zur Sicherung des Steckers in der Leitungslage speziell geformt ist. Die beiden Innenränder des bogenförmigen Langloches weisen am Ende des Langloches, das heisst in der Leitungslage des Steckers, eine Vertiefung auf, in welche der Stecker aufgrund des herrschenden Druckes mit einer am Stecker angeformten Schulter eingreift. Der Stecker kann daher nicht mehr zurückgeschwenkt werden, es sei denn, er wird zuvor gegen den herrschenden Druck in der Leitung etwas in das Sperrorgan hineingedrückt, sodass seine Schulter wieder aus der Vertiefung herauskommt und hernach ein Schwenken erlaubt. Bei dieser Lösung ist nachteilig, dass der Stecker gegen den herrschenden Druck in der Druckleitung in das Sperrorgan hineingedrückt werden muss, was bei grösseren Steckerdurchmessern und höheren Drucken problematisch ist.

Eine weitere Lösung zur Sicherung der Leitungslage des Steckers besteht in einer Muffe, welche hinter dem Kupplungsgehäuse dasselbe umschliesst und auf dem Kupplungsgehäuse axial gegen eine Federkraft nach hinten in Richtung der Druckleitung leicht verschiebbar ist. Die Muffe weist an ihrem vorderen Rand zwei diametral zueinander angeordnete, vom Rand abstehende Nocken auf, welche in Bohrungen oder Ausnehmungen in der Zylinderwand des Sperrorganes eingereifen. Die Bohrungen oder Ausnehmungen sind so angeordnet, dass die Nocken in Leitungslage des Sperrorganes in dieselben eingreifen, und zudem sind weitere Bohrungen oder Ausnehmungen vorhanden, in welche die Nocken dann eingreifen, wenn das Sperrorgan in die Kupplungslage geschwenkt ist. Zum Kuppeln der Sicherheitskupplung wird zunächst der Stecker in das Sperrorgan gesteckt. Hernach wird die Muffe mit den Nocken aus den Bohrungen oder Ausnehmungen im Sperrorgan herausgezogen, und dann kann der Stecker mitsamt dem Sperrorgan in die Leitungslage geschwenkt werden, in welcher die Nocken der federbelasteten Muffe wieder in die entsprechend angeordneten Bohrungen oder Ausnehmungen am Sperrorgan eingreifen und dessen Schwenklage damit sichern. Zum Entkuppeln wird die Muffe zurückgezogen, sodass das Sperrorgan wieder zum Schwenken freigegeben wird.

Ein dritte Variante zur Blockierung des schwenkbaren Sperrorganes in seinen verschiedenen Schwenklagen ist dadurch realisiert, dass ein Drehring auf der Hinterseite des Kupplungsdose angeordnet ist. Dieser weist ein steiles Innengewinde auf, sodass er beim Drehen auf der Kupplungsdose axial verschoben wird. Das zylinderische Sperrorgan weist sodann an seinem Umfang durch Wegfräsungen erzeugte Abplattungen auf, auf welche der vordere Rand des Drehringes zu liegen kommt, wenn er auf der Kupplungsdose so verdreht wird, dass er sich in Richtung gegen den Stecker hin verschiebt. Der Drehring kann auch durch eine innenliegende Feder belastet sein, sodass er in dieser Richtung verdreht gehalten wird und nur gegen die Kraft dieser Feder zurückgedreht werden kann. Nur durch das federbelastete Zurückdrehen kann bewirkt werden, dass sein vorderer Rand sich von der Abplattung zurückzieht und das Sperrorgan zum Schwenken freigibt.

Alle hier erwähnten Möglichkeiten zum Sichern des Sperrorganes in der Leitungslage können aber nicht sicherstellen, dass die Kupplungsdose nach der Entkupplung vor dem Eindringen von Schmutz und Staub gesichert ist. Wenn der Stecker aber nicht im Sperrorgan steckt, so bildet die offene Bohrung im Sperrorgan eine Öffnung, in welche leicht Schmutz oder gar kleine Teilchen eindringen können. Passiert das, so kann die Bohrung nur schwierig gesäubert werden. Sie muss notfalls ausgespritzt oder ausgewaschen werden und dann zum Trocknen mit Pressluft ausgeblasen werden, um hernach wieder volle Dichtigkeit zu gewähren, wenn ein Stecker eingesteckt wird und ein Medium unter Druck dichtend geleitet werden soll.

Die beschriebenen Lösungen zum Sichern des Schwenkorganes sind ausserdem relativ aufwändig in der Fabrikation und Montage, und ausserdem in der Handhabung nicht voll selbsterklärend.

Die Aufgabe der vorliegenden Erfindung ist es deshalb, eine steckbare Sicherheitskupplung für Druckleitungen mit einer Kupplungsdose mit darin schwenkbar gelagertem Sperrorgan zu schaffen, welche eine konstruktiv einfache und elegante, einfach handhabbare Sicherung des Sperrorganes in seiner Leitungslage erlaubt, sowie das Eindringen von Schmutz und Staub bei ausgezogenem Stecker verhindert.

Diese Aufgabe wird gelöst von einer steckbaren Sicherheitskupplung für Druckleitungen mit einer Kupplungsdose mit darin schwenkbar gelagertem Sperrorgan, welches eine diametrale durchgehende Bohrung aufweist, in welche ein Stecker in einem spitzen bis rechten Winkel zur Leitungslage drucklos einsteckbar ist und durch Schwenken mittels des Steckers in Leitungslage bringbar ist, und die sich dadurch auszeichnet, dass über die Kupplungsdose mit dem Schwenkorgan eine kappenförmige Sperrhülse mit halbkugelförmigem vorderen Ende gestülpt ist, wobei dieses halbkugelförmige Ende ein sphärisch verlaufendes Langloch aufweist, das sich vom Zentrum des halbkugelförmigen Endes aus längs eines Grosskreises auf dem halbkugelförmigen Ende erstreckt, wobei diese kappenförmige Sperrhülse auf der Kupplungsdose drehbar gelagert ist und von einer Feder so beaufschlagt ist, dass ihr Langloch sich verdreht zur Schwenkebene des Sperrorgans und Steckers erstreckt und gegen die Kraft der Feder in die Schwenkebene des Sperrorgans und Steckers schwenkbar ist.

In den Zeichnungen wird diese steckbare Sicherheitskupplung für Druckleitungen mit ihrer kappenfömigen Sperrhülse dargestellt und anhand dieser Zeichnungen wird sie nachfolgend beschrieben und ihre Funktion wird erläutert.
Es zeigt:
- Figur 1:: Die Sicherheitskupplung im entkuppelten Zustand mit geschützter Bohrung des Sperrorgans;
- Figur 2:: Die Sicherheitskupplung im entkuppelten Zustand mit verdrehter Sperrhülse und bereit zur Aufnahme des Steckers;
- Figur 3:: Die Sicherheitskupplung mit eingestecktem Stecker vor dem Verschwenken des Steckers und Sperrorganes in dessen Leitungslage;
- Figur 4:: Die Sicherheitskupplung mit eingestecktem Stecker in Leitungslage.

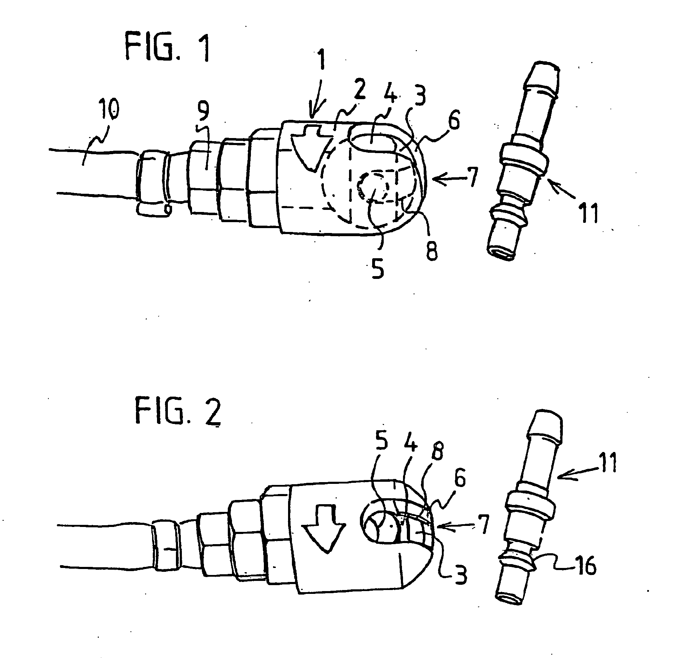

In Figur 1 ist die Kupplungsdose 1 mit der darübergestülpten Sperrhülse 2 in gezeigt. Die Kupplungsdose 1 besteht aus einem hier strichliniert eingezeichneten und aussen im wesentlichen kugelförmigen Gehäuse 3, in dessen Innerem ein zylinderförmiges Sperrorgan 4 schwenkbar und dichtend gelagert ist. Die Kupplungsdose 1 ist mit einer Verschraubung 9 oder Bride an einer Druckleitung 10 dichtend verschraubt oder verklemmt. Das ebenfalls strichliniert eingezeichnete, weil hier sonst nicht einsehbare zylinderförmige Sperrorgan 4 wird von einer diametralen Bohrung 5 durchsetzt, in welche ein zugehöriger Stecker 11 dichtend einsteckbar ist. Die kappenförmige Sperrhülse 2, die einen solchen Innendurchmesser aufweist, dass sie von vorne über das Gehäuse 3 stülpbar ist, ist vorne halbkugelförmig geformt und weist ein Langloch 6 auf, das sich von der Mitte des Sperrorgans 4 aus sphärisch um einen Winkel von 90° um eine Seite des vorderen, halbkugeligen Endes der Sperrhülse 2 bis zu deren vorderen Spitze 7 erstreckt. Das Langloch 6 folgt deshalb einem Grosskreis am halbkugelförmigen vorderen Ende der kappenförmigen Sperrhülse 2. Am darunterliegenden Gehäuse 3 ist ein gleich verlaufendes Langloch 8 vorhanden, sodass ein in der Bohrung 5 steckender Stecker 11 längs dieses Langloches 8 unter Mitnahme bzw. unter Mitschwenkens des Sperrorgans 4 im Gehäuse 3 schwenkbar ist. Im Innern der Sperrhülse 2, hinter dem Kupplungsgehäuse 3, ist eine hier nicht eingezeichnete Feder eingebaut, welche dafür sorgt, dass die Sperrhülse 2 von vorne gesehen, das heisst im Bild rechts gesehen, im Uhrzeigersinn gedreht wird, bis sie in der hier gezeigten Position einen Anschlag am Kupplungsgehäuse 3 findet. In dieser Position nämlich liegt der hintere Anfang des Langloches 6 gegenüber der einen Stirnseite des zylindrischen Sperrorgans 4 und ist gegenüber dem darunterliegenden Langloch 8 im Gehäuse 3 um 90° verdreht. In dieser Ruhelage der Sperrhülse 2, welche diese immer dann einnimmt, wenn kein Stecker 11 in der Kupplungsdose 1 steckt, schützt deshalb die Sperrhülse 2 die diametrale Bohrung 5 im Sperrorgan 4 vor dem Eindringen von Schmutz, Staub oder irgendwelchen Fremdteilen. Gegen die Kraft der eingelegten Feder kann die Sperrhülse 2 im Bild von rechts gesehen gegen den Uhrzeigersinn auf dem Kupplungsgehäuse 3 verdreht werden, in Richtung des hier auf der Sperrhülse 2 eingezeichneten Pfeils. Dieses Verdrehen ist notwendig, um einen Stecker 11 mit der Kupplungsdose 1 zusammenzustecken.

In Figur 2 ist der Zustand der Kupplungsdose 1 gezeigt, nachdem die Sperrhülse 2 ausgehend von der Situation in Figur 1 zum Einstecken eines Steckers 8 von vorne gesehen um 90° im Gegenuhrzeigersinn verdreht wurde, was gegen die Kraft der inliegenden Feder erfolgte. In dieser Position der Sperrhülse 2 liegt deren Langloch 6 mit seinem hinteren Ende genau gegenüber der diametralen Bohrung 5 im Sperrorgan 4. Die Bohrung 5 ist deshalb freigegeben, um einen Stecker 11 in sie einzustecken. Dabei ist das Sperrorgan 4 immer noch unverändert in der Schwenklage, in welcher seine diametrale Bohrung 5 quer zur Richtung der Druckleitung im Kupplungsgehäuse 3 verläuft. Entsprechend sperrt das Sperrorgan 4 den Durchfluss nach wie vor und somit steht die Bohrung 5 nicht unter Druck. Deshalb kann ein Stecker 11 bequem drucklos bis zu seinem Anschlag in diese Bohrung 5 eingesteckt werden. Zur Abdichtung zwischen dem Stecker 8 und der Bohrung 5 dient ein Gummi-O-Ring auf dem Stecker 11 oder im Innern der Bohrung 5. Bis der Stecker 11 eingesteckt ist, muss die Sperrhülse 2 gegen die wirkende Federkraft in der gezeigten Lage gehalten werden.

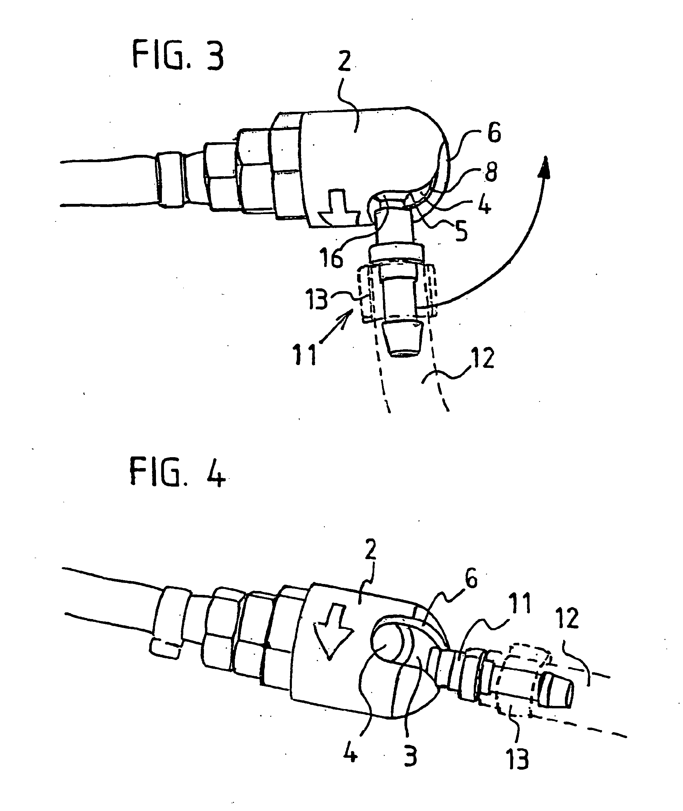

Die Figur 3 zeigt nun die Situation nach dem erfolgten drucklosen Einstecken des Steckers 11 in die diametrale Bohrung 5 im Sperrorgan 4. Die Sperrhülse 2 kann jetzt losgelassen werden. Sie kann nicht mehr in die ursprüngliche Lage zurückdrehen, weil der Stecker 11 das verhindert. Ab der hier gezeigten Situation wird der Stecker 11, der zum Beispiel mittels einer Klemmbride 13 an einer Druckleitung 12 montiert ist, unter Drehung des Sperrorganes 4 im Kupplungsgehäuse 3 in Richtung des eingezeichneten Pfeiles geschwenkt, bis der Stecker 11 mit der Druckleitung im Innern der Kupplungsdose 1 fluchtet. Die abgeschrägte Schulter 16 an der Auskragung am Stecker 11 gleitet dabei unter die Längsränder des Langloches 6 am Gehäuse 3, sodass der Stecker 11 vor einem Herausgleiten gesichert ist und deshalb in der Bohrung 5 festgehalten ist.

Schliesslich nimmt der Stecker 11 die Position wie in Figur 4 gezeigt ein. Gegen Ende seiner Schwenkung wurde die Bohrung 5 im Sperrorgan 4 in die Druckleitung hineingeschwenkt und kommuniziert fortan mit derselben. Das Druckmedium kann die Kupplung durchströmen, das heisst es fliesst durch die Bohrung 5 im Sperrorgan 4 und von dort in den Stecker 11 und in die Druckleitung 13. Sobald der Stecker 11 die in Figur 4 gezeigte Position eingenommen hat, kann die Sperrhülse 2 kraft ihrer inliegenden Feder im Uhrzeigersinn zurückdrehen, sodass sie die hier gezeigte Position einnimmt, in welcher man die eine flache Stirnseite des zylinderförmigen Sperrorgans 4 erkennt. In dieser Position verhindert sie das Zurückschwenken des Steckers 11 und wenn dieser mit einer auskragenden Schulter auf der Innenseite des Langloches 8 gehalten ist, ist er auch vor einem Herausfallen gesichert. Die Sperrhülse 2 umschliesst praktisch die gesamte Kupplung. Wird die Kupplung dem Boden nachgeschleift, was in Werkstätten und Betrieben häufig der Fall ist, so wird Dank ihres runden vorderen Endes ein Hängenbleiben an irgendwelchen Hindernissen eher verhindert als mit einem eckigen Gehäuse. Die wirkende Federkraft hält die Sperrhülse 2 stets in der sperrenden Lage, sodass sowohl der Stecker 11 wie auch das Sperrorgan 4 im Kupplungsgehäuse 3 zuverlässig vor einem Verschwenken geschützt ist.

Zum Entkuppeln wird zunächst die Sperrhülse 2 wiederum von hier rechts gesehen im Gegenuhrzeigersinn um 90° verdreht, wodurch das Langloch 6 wieder in die Schwenkebene des Steckers 11 gebracht wird. Hernach kann der Stecker 11 in Richtung des hier eingezeichneten Pfeiles geschwenkt werden, bis er am Ende des Langloches 6 in der Sperrhülse 2 anschlägt. In dieser Schwenklage, die wiederum derjenigen in Figur 3 gezeigten entspricht, kann der Stecker 11 aus der Bohrung 5 im Sperrorgan 4 herausgezogen werden, denn dieses sperrt nun wieder den Durchfluss des Druckmediums. Zum Einsatz der Kupplung für hohe Drucke oder bei grossen Leitungsdurchmessern empfiehlt es sich, im Kupplungsgehäuse 3 eine Entlastungsbohrung vorzusehen, welche von der Aufnahmebohrung oder Büchse aus, in welcher das Sperrorgan 4 drehbar gelagert ist, nach aussen mündet. Diese Entlastungsbohrung wird dann im Zuge der Schwenkung des Sperrorganes 4, solange das Sperrorgan noch den Durchfluss sperrt, von dessen Bohrung 5 überstrichen. In dieser Weise wird für das Entkuppeln beim Zurückschwenken des Steckers 11 zunächst der steckerseitige Druck abgebaut, indem das Druckmedium durch diese Entlastungsbohrung aus der Druckleitung 13 und dem Stecker 11 nach aussen entweichen kann, sobald die Bohrung 5 über der Entlastungsbohrung zu liegen kommt. Dann wird der Stecker 11 mit dem Sperrorgan 4 weitergeschwenkt, bis er seine Endlage wie in Figur 3 gezeigt einnimmt. Aus dieser Position kann er sodann drucklos aus der Bohrung 5 im Sperrorgan 4 herausgezogen werden. Nach dem Herausziehen des Steckers 11 schwenkt die Sperrhülse 2 kraft der inliegenden Feder zurück in ihre Ausgangsposition, die in Figur 1 gezeigt ist.

Diese neuartige Sperrhülse 2 lässt sich vorzüglich durch Pressen aus Stahlblech oder Aluminiumblech fertigen. Sie kann aber auch aus Aluminium im Druckguss-Verfahren hergestellt werden. Als Alternativen bieten sich Sperrhülsen aus Kunststoff an, die im Spritzverfahren hergestellt werden, oder für spezielle Applikationen sind auch Sperrhülsen aus Messing denkbar, die dann einzeln aus aus Vollmaterial gefräst werden.

## Patentansprüche

1. Steckbare Sicherheitskupplung für Druckleitungen (10;13) mit einer Kupplungsdose (1) mit darin schwenkbar gelagertem Sperrorgan (4), welches eine diametrale durchgehende Bohrung (5) aufweist, in welches ein Stecker (11) in einem spitzen bis rechten Winkel zur Leitungslage drucklos einsteckbar ist und durch Schwenken mittels des Steckers (11) in Leitungslage bringbar ist, ***dadurch gekennzeichnet,* dass** über die Kupplungsdose (1) mit dem Schwenkorgan (4) eine kappenförmige Sperrhülse (2) mit halbkugelförmigem vorderen Ende (7) gestülpt ist, wobei dieses halbkugelförmige Ende (7) ein sphärisch verlaufendes Langloch (6) aufweist, das sich vom Zentrum des halbkugelförmigen Endes (7) aus längs eines Grosskreises auf dem halbkugelförmigen Ende (7) erstreckt, wobei diese kappenförmige Sperrhülse (2) auf der Kupplungsdose (1) drehbar gelagert ist und von einer Feder so beaufschlagt ist, dass ihr Langloch (6) sich verdreht zur Schwenkebene des Sperrorgans (4) und Steckers (11) erstreckt und gegen die Kraft der Feder in die Schwenkebene des Sperrorgans (4) und Steckers (11) schwenkbar ist.

2. Steckbare Sicherheitskupplung für Druckleitungen (10;13) nach Anspruch 1, ***dadurch gekennzeichnet,* dass** die kappenförmige Sperrhülse (2) auf der Kupplungsdose (1) um 90° drehbar gelagert ist und von einer Feder so beaufschlagt ist, dass ihr Langloch (8) sich um 90° verdreht zur Schwenkebene des Sperrorgans (4) und Steckers (11) erstreckt und gegen die Kraft der Feder in die Schwenkebene des Sperrorgans (4) und Steckers (11) schwenkbar ist.

3. Steckbare Sicherheitskupplung für Druckleitungen nach einem der vorangehenden Ansprüche, ***dadurch gekennzeichnet,* dass** das Kupplungsgehäuse (3) eine Entlastungsbohrung aufweist, welche ausserhalb seiner Druckleitung von aussen in das Innere der Aufnahmebohrung für das Sperrorgan (4) mündet. ,

4. Steckbare Sicherheitskupplung für Druckleitungen nach einem der vorangehenden Ansprüche, ***dadurch gekennzeichnet,* dass** im Innern der Sperrhülse (2) und an der gegenüberliegenden Aussenseite des Kupplungsgehäuses (3) ein Anschlag gebildet ist, sodass die von einer Feder beaufschlagte Sperrhülse (2) in ihrer Drehung zu einem Anschlag kommt, wenn ihr Langloch (6) auf der Stirnseite des Sperrorganes (4) im Kupplungsgehäuse (3) zu liegen kommt.

5. Steckbare Sicherheitskupplung für Druckleitungen nach einem der vorangehenden Ansprüche, ***dadurch gekennzeichnet,* dass** das der zugehörige Stecker (11) eine Auskragung mit abgeschrägter Schulter (16) aufweist, welche bei in die Bohrung (5) eingestecktem Stecker (11) und dessen Schwenkung unter das Langloch im Gehäuse (3) gleitet.

6. Steckbare Sicherheitskupplung für Druckleitungen nach einem der vorangehenden Ansprüche, ***dadurch gekennzeichnet,* dass** die Sperrhülse (2) aus Stahl- oder Aluminiumblech im Pressverfahren hergestellt ist.

7. Steckbare Sicherheitskupplung für Druckleitungen nach einem der Ansprüche 1 bis 5, ***dadurch gekennzeichnet,* dass** die Sperrhülse (2) aus Aluminium im Druckguss-Spritzverfahren hergestellt ist.

8. Steckbare Sicherheitskupplung für Druckleitungen nach einem der Ansprüche 1 bis 5, ***dadurch gekennzeichnet,* dass** die Sperrhülse (2) aus Kunststoff im Spritzverfahren hergestellt ist.

9. Steckbare Sicherheitskupplung für Druckleitungen nach einem der Ansprüche 1 bis 5, ***dadurch gekennzeichnet,* dass** die Sperrhüise (2) aus Messing gefertigt ist.

## Claims

1. A plug-in safety coupling for pressure pipes (10; 12) comprising a coupler box (1) pivotally mounted therein, the blocking member having a diametrical through bore (5) in which a plug (11) can be inserted in a depressurized state at an acute to right angle with respect to the conducting position and brought into the conducting position by pivoting the plug (11), ***characterised in that*** a cap-like locking sleeve (2) having a hemispherical front end (7) is placed over the coupler box (1) with the pivoting member (4), the hemispherical front end (7) having a spherically extending oblong hole (6) which extends from the centre of the hemispherical end (7) along a great circle on the hemispherical end (7), the cap-like locking sleeve (2) being rotatably mounted on the coupler box (1) and actuated by a spring so that its oblong hole (6) extends at an angle with respect to the pivoting plane of the blocking member (4) and the plug (11), and being rotatable against the force of the spring into the pivoting plane of the blocking member (4) and the plug (11).

2. A plug-in safety coupling for pressure pipes (10; 12) according to claim 1, ***characterised in that*** the cap-like locking sleeve (2) is mounted for rotation by 90° on the coupler box (1) and is actuated by a spring such that its oblong hole (6) extends at an angle of 90° with respect to the pivoting plane of the blocking member (4) and the plug (11) and is rotatable against the force of the spring into the pivoting plane of the blocking member (4) and the plug (11).

3. A plug-in safety coupling for pressure pipes according to any preceding claim, ***characterised in that*** the coupler housing (3) has a relief bore which leads from the outside into the interior of the receiving bore for the blocking member (4) outside the pressure pipe.

4. A plug-in safety coupling for pressure pipes according to any preceding claim, ***characterised in that*** a stop is formed inside the locking sleeve (2) and at the opposite outer side of the coupler housing (3), so that the rotation of the spring loaded locking sleeve (2) abuts a stop when its oblong hole (6) comes to lie on the front side of the blocking member (4) in the coupler housing (3).

5. A plug-in safety coupling for pressure pipes according to any preceding claim, ***characterised in that*** the appertaining plug (11) has a projection with a chamfered shoulder (16) which slides under the oblong hole in the housing (3) when the plug (11) is inserted in the bore (5) and rotated.

6. A plug-in safety coupling for pressure pipes according to any preceding claim, ***characterised in that*** the locking sleeve (2) is made of sheet steel or sheet aluminium by pressing.

7. A plug-in safety coupling for pressure pipes according to any one of claims 1 to 5, ***characterised in that*** the locking sleeve (2) is made of aluminium by die-casting.

8. A plug-in safety coupling for pressure pipes according to any one of claims 1 to 5, ***characterised in that*** the locking sleeve (2) is made of plastics by injection moulding.

9. A plug-in safety coupling for pressure pipes according to any one of claims 1 to 5, ***characterised in that*** the locking sleeve (2) is made of brass.

## Revendications

1. Raccord de sécurité à enfichage pour conduite sous pression (10 ; 13) comportant une boîte de raccordement (1) avec organe d'arrêt (4) monté pivotant à l'intérieur, qui présente un trou débouchant (5) diamétral dans lequel un connecteur (11) peut être enfiché hors pression suivant un angle aigu à droit par rapport à l'orientation de la conduite, et qui peut être amené dans l'orientation de la conduite au moyen du connecteur (11), **caractérisé en ce qu'**une douille d'arrêt (2) en forme de capuchon avec extrémité avant (7) en forme de demi-sphère est emboutie par retournement sur la boîte de raccordement (1) avec l'organe pivotant (4), cette extrémité (7) en forme de demi-sphère présentant un trou oblong (6) s'étendant de manière sphérique et qui s'étend depuis le centre de l'extrémité (7) en forme de demi-sphère le long d'un grand cercle sur l'extrémité (7) en forme de demi-sphère, cette douille d'arrêt (2) en forme de capuchon étant montée tournante sur la boîte de raccordement (1) et étant sollicitée par un ressort de manière que son trou oblong (6) s'étende tourné par rapport au plan de pivotement de l'organe d'arrêt (4) et du connecteur (11) et puisse pivoter, à l'encontre de la force du ressort, dans le plan de pivotement de l'organe d'arrêt (4) et du connecteur (11).

2. Raccord de sécurité à enfichage pour conduite sous pression (10 ; 13) selon la revendication 1, **caractérisé en ce que** la douille d'arrêt (2) en forme de capuchon est montée sur la boîte de raccordement (1) de manière à pouvoir tourner de 90° et sollicitée par un ressort de façon que son trou oblong (8) s'étende tourné de 90° par rapport au plan de pivotement de l'organe d'arrêt (4) et du connecteur (11), et puisse pivoter, à l'encontre de la force du ressort, dans le plan de pivotement de l'organe d'arrêt (4) et du connecteur (11).

3. Raccord de sécurité à enfichage pour conduite sous pression selon l'une des revendications précédentes, **caractérisé en ce que** le boîtier de raccord (3) présente un trou de décharge qui débouche de l'extérieur, à l'extérieur de sa conduite sous pression, à l'intérieur du trou de réception de l'organe d'arrêt (4).

4. Raccord de sécurité à enfichage pour conduite sous pression selon l'une des revendications précédentes, **caractérisé en ce qu'**une butée est formée à l'intérieur de la douille d'arrêt (2) et sur le côté extérieur opposé du boîtier de raccord (3), ce qui fait que la douille d'arrêt (2), sollicitée par un ressort, vient en butée lors de sa rotation, lorsque son trou oblong (6) vient se placer sur la face frontale de l'organe d'arrêt (4) dans le boîtier de raccord (3).

5. Raccord de sécurité à enfichage pour conduite sous pression selon l'une des revendications précédentes, **caractérisé en ce que** le connecteur (11) correspondant présente un porte-à-faux avec épaulement (16) chanfreiné, qui glisse sous le trou oblong dans le boîtier (3) lorsque le connecteur (11) est enfiché dans le trou (5) et lors du pivotement de ce connecteur.

6. Raccord de sécurité à enfichage pour conduite sous pression selon l'une des revendications précédentes, **caractérisé en ce que** la douille d'arrêt (2) est fabriquée en tôle d'acier ou d'aluminium par un procédé à la presse.

7. Raccord de sécurité à enfichage pour conduite sous pression selon l'une des revendications 1 à 5, **caractérisé en ce que** la douille d'arrêt (2) est fabriquée en aluminium par un procédé d'injection sous pression.

8. Raccord de sécurité à enfichage pour conduite sous pression selon l'une des revendications 1 à 5, **caractérisé en ce que** la douille d'arrêt (2) est fabriquée en matière plastique par un procédé d'injection.

9. Raccord de sécurité à enfichage pour conduite sous pression selon l'une des revendications 1 à 5, **caractérisé en ce que** la douille d'arrêt (2) est fabriquée en laiton.
